# EUROPEAN PATENT APPLICATION

(11) **EP 2 441 994 A1**
(43) Date of publication of application: **18.04.2012**
(21) Application number: 10785914.2
(22) Date of filing: 03.06.2010
(51) Int. Cl.: F16K 27/00, F16K 31/04, F23K 5/00, G01F 3/22

(54) **SHUTOFF VALVE UNIT**

(30) Priority: 08.06.2009 JP 2009136975
(71) Applicant: Panasonic Corporation, Kadoma-shi Osaka 571-8501 (JP)
(72) Inventor: YAMAGUCHI, Masaki, Chuo-ku, Osaka-shi Osaka 540-6207 (JP); NAGANUMA, Naoto, Chuo-ku, Osaka-shi Osaka 540-6207 (JP)
(74) Representative: Schwabe - Sandmair - Marx
(86) International application number: PCT/JP2010/003726
(87) International publication number: WO 2010/143382

(57) **Abstract**

It is an object of the present invention to provide a shutoff valve unit which can be easily attached to a gas meter whose casing is formed with a press worked thin plate and has a resistance to foreign materials or water in a piping or a tamper.

An inlet pipe 51, a speed reducing chamber 52 arranged in a lower part of the inlet pipe and having a flow passage sectional area larger than a flow passage sectional area of the inlet pipe 51, a transverse passage 53 opened substantially in a horizontal direction from a side surface at a position higher than a bottom surface 52a and a valve chamber 56 having a valve seat hole 54 opened downward to a gas introducing chamber 46 in the gas meter are integrally formed with a synthetic resin, and a shutoff valve 81 is provided which has a valve disk 82 for opening and closing the valve seat hole 54 and incorporates an air-tight structure in a main body to form a shutoff valve unit. Accordingly, the foreign materials or water in the piping drop in the speed reducing chamber 52, and even when a finger or a rod shaped member is inserted, the valve disk 82 cannot be easily touched. Thus, an inexpensive shutoff valve unit can be provided which has the resistance to the foreign materials or the water in the piping and the tamper.

## Description

### Technical Field

The present invention relates to a unit that installs in a gas introducing chamber of a gas meter a shutoff valve which can shut off an entry of gas to the gas introducing chamber from a gas inlet.

Usually, in Japan, as a gas meter (abbreviate it as a microcomputer meter, hereinafter) in which a gas shutoff device having a microcomputer mounted by a battery power is incorporated, the gas meter having a shutoff valve incorporated is widely circulated. In this kind of microcomputer meter, when a flow rate of gas is monitored by a flow rate sensor of the gas meter to decide that a using state of gas is abnormal by the microcomputer, or when the states of sensors such as an earthquake sensor, a gas pressure sensor, a gas alarm or a carbon monoxide sensor are monitored to decide a dangerous state, the gas is shut off by the shutoff valve.

The gas meter in the Japan is mainly formed with an aluminum die cast product. A shutoff valve passage can be relatively easily formed integrally with a casing of the gas meter (for instance, see patent literature 1).

Recently, in USA, various countries of EU or the like, a shutoff valve is requested to be incorporated in a gas meter as a unit for meeting a non-payment of gas charge.

The gas meter of USA and the various countries of EU generally has a structure in which a measuring part is accommodated in a casing made of a press worked steel sheet, a gas inlet pipe is substantially a straight pipe attached to a hole opened on a top surface of the casing and opened inside the top surface and an inner side of the casing is filled with gas. Accordingly, the shutoff valve cannot be directly attached to the casing similarly to Japan.

When the shutoff valve is attached to such a gas meter having the casing made of the press worked steel sheet, a unit is used that air-tightly connects a shutoff valve unit to the gas inlet pipe from inside the casing of the gas meter (for instance, see patent literature 2).

Fig. 4 shows the usual gas meter and a shutoff valve passage disclosed in the patent literature 2.

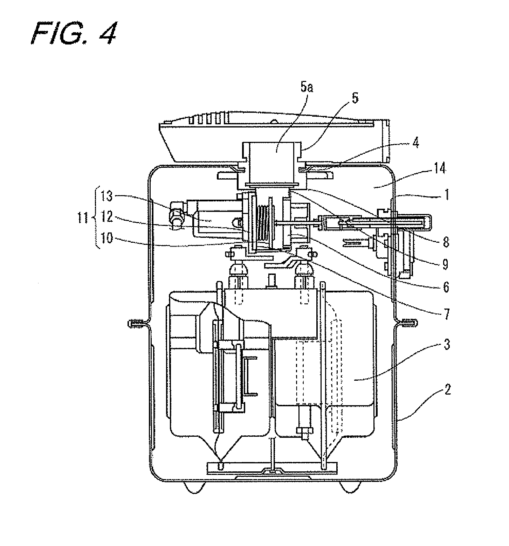

As shown in Fig. 4, the gas meter includes an upper casing 1 made of a press worked steel sheet, a lower casing 2 similarly made of a press worked steel sheet, a measuring part 3, a gas inlet pipe 5 air tightly attached to a hole 4 opened on a top surface of the upper casing 1, a valve seat hole 6 in a transverse direction and a shutoff valve attaching hole 7 in an opposed surface, a shutoff valve passage 9 attached to the gas inlet pipe 5 through a packing 8 by using screws and a shutoff valve 11 having a valve disk 10 attached to the shutoff valve attaching hole 7 and moving in the transverse direction in the shutoff valve passage 9 to close the valve seat hole 6 so that gas may be shut off.

The shutoff valve 11 includes the valve disk 10 having synthetic rubber as a seal member, an attaching plate 12 and a self-hold type electromagnetic solenoid 13 that drives the valve disk 10, and an air-tight structure (not shown in the drawing) that air tightly separates the valve disk 10 side from the electromagnetic solenoid 13 with the attaching plate 12 sandwiched between them.

In Fig. 4, when the shutoff valve 11 is opened, the valve disk 10 does not close the valve seat hole 6 so that the gas is introduced into a gas introducing chamber 14 as a space inside the upper casing 1 and the lower casing 2 from the valve seat hole 6 from the gas inlet pipe 5 via the shutoff valve passage 9.

### Literature of Related Art

### Patent Literature

Patent Literature 1: JP-A-11-108725 (Fig. 4)
Patent Literature 2: JP-A-11-248506

### Summary of the Invention

### Problems that the Invention is Solve

However, in the usual structure, the valve disk 10 and the valve seat hole 6 are located immediately below an opening hole 5a of the gas inlet pipe 5. Accordingly, a problem arises that when foreign materials such as iron rust or water droplets in a piping drop, there is a high possibility that the foreign materials may adhere to the valve disk 10 or the valve seat hole 6 to deteriorate a closing performance of the shutoff valve 11 due to the adhesion of the foreign materials.

Further, under a state that the gas meter is not attached to a gas piping, the valve disk 10 and the valve seat hole 6 are located at positions where the valve disk 10 and the valve seat hole 6 can be easily touched from the opening hole 5a of the gas inlet pipe 5. Therefore, a problem arises that it is possible to easily make a tamper that a finger or a rod shaped member is inserted from the opening hole 5a so as to break the valve disk 10 or the valve seat hole 6, or a behavior that an obstacle is inserted between the valve disk 10 and the valve seat hole 6 so as not to close the valve and to steal the gas.

In the above-described usual structure, when a large quantity of water temporarily enters the gas meter from the gas piping under a state that the shutoff valve 11 is opened, a sump is formed in a lower side of the shutoff valve passage 9 from the valve seat hole 6. Since an outside diameter of the valve disk 10 is larger than an inside diameter of the valve seat hole 6, a part of the valve disk 10 occasionally sinks in water. Accordingly, a problem arises that there is a possibility that the synthetic rubber is deteriorated by water, or the foreign materials dropping in the shutoff valve passage 9 float due to the water or adhere to the valve disk 10 or the valve seat hole 6 to deteriorate a closing performance of the shutoff valve 11.

Further, in the above-described usual structure, since the shutoff valve passage 9 is attached to the gas inlet pipe 5 through the packing 8 by using the screws, a problem arises that a workability of assembling the gas meter is not good.

Further, in the above-described usual structure, since the shutoff valve 11 is arranged in the transverse direction, a problem arises that there is a high possibility that the shutoff valve passage 9 needs a height not smaller than a height including a width of the attaching plate 12 of the shutoff valve 11 in addition to a height of a seal part of the packing 8 in a lower side of the gas inlet pipe 5, and, for instance, the height of the upper casing 1 is increased in order to avoid an interference with the measuring part 3 so that a compensation for arrangement of the shutoff valve passage is increased.

It is an object of the present invention to solve the above-described usual problems and provide a shutoff valve unit which can be easily attached to a gas meter whose casing is formed with a press worked thin plate and can apply a cutting off function to the gas meter. Further, it is an object of the present invention to provide a shutoff valve unit which can reduce a deterioration of a valve closing performance due to the adhesion of foreign materials and the entry of water to a piping. Further, it is an object of the present invention to provide a shutoff valve unit in which it is difficult to make a tamper or steal gas. Further, it is an object of the present invention to provide an inexpensive shutoff valve passage whose height can be made to be compact.

### Means for Solving the Problems

In order to solve the above-described usual problems, a shutoff valve unit of the present invention includes a substantially vertical inlet pipe which can be air-tightly attached to a gas inlet pipe of a gas meter through a first packing, a speed reducing chamber arranged in a lower part of the inlet pipe and having a flow passage sectional area larger than a flow passage sectional area of the inlet pipe, a transverse passage opened substantially in a horizontal direction from a side surface at a position higher than a bottom surface of the speed reducing chamber, a valve chamber arranged in an end part of the transverse passage and having a valve seat hole opened downward to a gas introducing chamber in the gas meter and a shutoff valve attaching hole provided to be opposed to the valve seat hole and a shutoff valve attached to the shutoff valve attaching hole through a second packing and having a valve disk that opens and closes the valve seat hole, and is **characterized in that** the shutoff valve has an air-tight structure between a passage in which the valve disk is located and an outer side of the passage on the other side of an attaching plate.

Thus, since the valve disk of the shutoff valve or the valve seat hole are located in an interior of the transverse passage, and accordingly, the valve disk of the shutoff valve or the valve seat hole cannot be seen from the gas inlet of the gas meter. Accordingly, even when a finger or a rod shaped member is inserted, they cannot be easily touched. Thus, a tamper to the shutoff valve is effectively prevented.

Further, since the flow passage sectional area of the pressure reducing chamber is larger than that of the inlet pipe, a flow velocity of gas is decelerate in the speed reducing chamber. At this time, since foreign materials having a relatively large mass such as iron rust, water droplets or the like of a piping drop in the pressure reducing chamber, the foreign materials do not reach the valve disk of the shutoff valve or the valve seat hole. Thus, a deterioration of a valve closing performance of the shutoff valve due to the foreign materials can be effectively reduced.

Further, under a state that the shutoff valve is opened, even when water temporarily enters the gas meter from a gas piping, if a quantity of water is small, the water is dropped in the speed reducing chamber. Even when a quantity of water is larger, the water is dropped in the gas introducing chamber in the gas meter from the valve seat hole. Therefore, the valve disk does not sink in the water, so that the deterioration of synthetic rubber of the valve disk by the water can be prevented. Further, there is an effect of a low possibility that the foreign materials dropping in the passage of the shutoff valve may float in the water and adhere to the valve disk.

### Advantages of the Invention

According to the shutoff valve unit of the present invention, a casing can be easily attached to the gas meter formed with a press worked thin plate and a cutting off function can be applied to the gas meter. Further, the deterioration of the valve closing performance due to the adhesion of the foreign materials and the entry of water to the piping can be reduced. Further, the shutoff valve unit can be provided in which it is difficult to make a tamper or steal gas. Further, the inexpensive shutoff valve unit can be provided whose height can be made to be compact.

### Brief Description of the Drawings

[Fig. 1] is a sectional view of a shutoff valve unit and an upper casing of a gas meter in a first exemplary embodiment of the present invention.
[Fig. 2] is a perspective view showing an assembled image of the shutoff valve unit in the first exemplary embodiment of the present invention.
[Fig. 3] is a sectional view of a shutoff valve in the first exemplary embodiment of the present invention.
[Fig. 4] is a sectional view of a usual gas meter in which a shutoff valve is incorporated.

### Mode for Carrying Out the Invention

A first invention provides a shutoff valve unit including a substantially vertical inlet pipe which can be air-tightly attached to a gas inlet pipe of a gas meter through a first packing, a speed reducing chamber arranged in a lower part of the inlet pipe and having a flow passage sectional area larger than a flow passage sectional area of the inlet pipe, a transverse passage opened substantially in a horizontal direction from a side surface at a position higher than a bottom surface of the speed reducing chamber, a valve chamber arranged in an end part of the transverse passage and having a valve seat hole opened downward to a gas introducing chamber in the gas meter and a shutoff valve attaching hole provided to be opposed to the valve seat hole and a shutoff valve attached to the shutoff valve attaching hole through a second packing and having a valve disk that opens and closes the valve seat hole, and **characterized in that** the shutoff valve has an air-tight structure between a passage in which the valve disk is located and an outer side of the passage on the other side of an attaching plate. Thus, since the valve disk of the shutoff valve or the valve seat hole are located in an interior of the transverse passage, and accordingly, the valve disk of the shutoff valve or the valve seat hole cannot be seen from the gas inlet of the gas meter. Accordingly, even when a finger or a rod shaped member is inserted, they cannot be easily touched. Thus, a tamper to the shutoff valve is effectively prevented.

Further, since the flow passage sectional area of the pressure reducing chamber is larger than that of the inlet pipe, a flow velocity of gas is decelerate in the speed reducing chamber, At this time, since foreign materials having a relatively large mass such as iron rust, water droplets or the like of a piping drop in the pressure reducing chamber, the foreign materials do not reach the valve disk of the shutoff valve or the valve seat hole. Thus, a deterioration of a valve closing performance of the shutoff valve due to the foreign materials can be effectively reduced.

Further, under a state that the shutoff valve is opened, even when water temporarily enters the gas meter from a gas piping, if a quantity of water is small, the water is dropped in the speed reducing chamber. Even when a quantity of water is larger, the water is dropped in the gas introducing chamber in the gas meter from the valve seat hole. Therefore, the valve disk does not sink in the water, so that the deterioration of synthetic rubber of the valve disk by the water can be prevented. Further, there is an effect of a low possibility that the foreign materials dropping in the passage of the shutoff valve may float in the water and adhere to the valve disk.

In a second invention, especially since the inlet pipe, the speed reducing chamber, the transverse passage and the valve chamber of the first invention are integrally formed with a synthetic resin, an opening hole is provided on a side surface of the pressure reducing chamber opposite to the transverse passage and a cover is air-tightly attached to the opening hole, a passage main body can be effectively formed with two parts made of an inexpensive synthetic resin and a cutting off function can be economically applied to the gas meter.

According to a third invention, especially in the first invention or the second invention, since the first packing is an O-ring packing which can be diametrically compressed and the inlet pipe has an upper part which can be inserted to the O-ring packing and an outer surface formed in a tapered shape in which an upper diameter is small and a lower diameter is large, the inlet pipe can be effectively and easily attached to the gas meter only by inserting the inlet pipe to the gas inlet pipe.

In a fourth invention, since the shutoff valve is a motor type shutoff valve in which a turning force or torque of a rotor of a two-phase excitation PM type stepping motor whose rotating shaft is substantially vertically arranged is converted into a vertical movement to move the valve disk upward downward and an air-tight structure is provided between the valve disk and the rotor, and the attaching plate and a stator arranged in an upper part thereof, a height can be made to be lower than that of a solenoid. Further, since a position of the gas inlet pipe is separated from a position of the shutoff valve in the transverse direction, the shutoff valve can be effectively installed by avoiding an interference with a protruding part that attaches the gas inlet pipe to an upper casing of the gas meter. In addition to the effects, an installed height of the shutoff valve unit can be effectively made to be small and the shutoff valve unit can be installed in a limited space of an existing gas meter.

Now, an exemplary embodiment of the present invention will be described below by referring to the drawings. The present invention is not limited by this exemplary embodiment.

### (First Exemplary Embodiment)

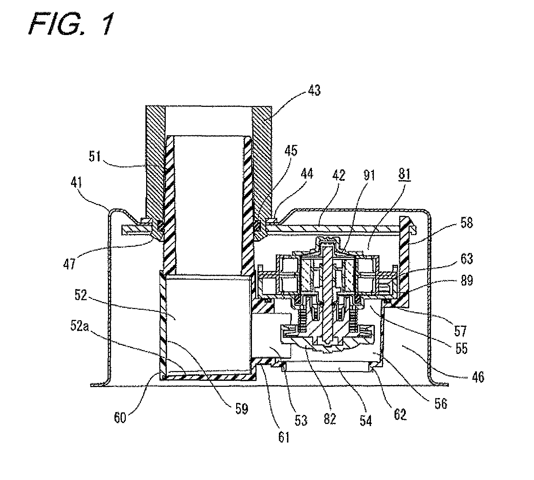

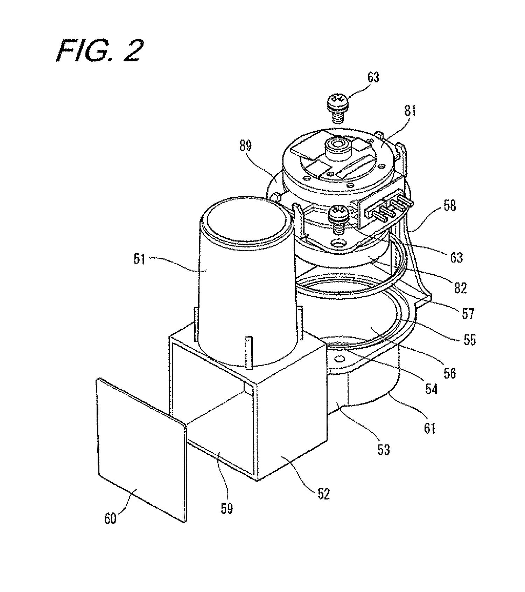

Fig. 1 is a sectional view of a shutoff valve unit and an upper casing of a gas meter in a first exemplary embodiment of the present invention. Fig. 2 is a perspective view showing an assembled image of the shutoff valve unit in the first exemplary embodiment of the present invention.

In Fig. 1 and Fig. 2, the upper casing of the gas meter includes an upper casing 41 formed substantially in the shape of a pan by drawing press working a steel sheet having a thickness of, for instance, about 0.8 mm and a substantially straight pipe shaped gas inlet pipe 43 attached to the upper casing 41 and having an O-ring 45 arranged in an inner surface. The gas inlet pipe 43 is inserted into a hole opened in the upper casing 41 by holding a packing 44 and a reinforcing plate 42 made of a steel sheet of, for instance, about 1.6 mm at the same time and caulking a caulking part 47 protruding inside the upper casing 41, so that the gas inlet pipe is air-tightly attached to the upper casing 41.

In the gas inlet pipe 43, a substantially vertically arranged straight pipe shaped inlet pipe 51 is provided which is inserted from a lower part so as to diametrically compress the O-ring 45 and formed in a tapered shape whose upper diameter is small and whose lower diameter is large. Further, a speed reducing chamber 52 is provided which is arranged in a lower part of the inlet pipe 51 and has a flow passage sectional area larger than a flow passage sectional area of the inlet pipe 51 and a transverse passage 53 is provided which is opened substantially in a horizontal direction from a side surface at a position higher than a bottom surface 52a of the speed reducing chamber 52. Further, a valve chamber 56 is provided which is arranged in an end part of the transverse passage 53, has a valve seat hole 54 opened downward to a gas introducing chamber 46 in the gas meter and a shutoff valve attaching hole 55 opposed to the valve seat hole 54. The inlet pipe 51, the speed reducing chamber 52, the transverse passage 53 and the valve chamber 56 are integrally formed by an injection molding work of a synthetic resin. Then, a shutoff valve 81 is provided which is attached to the shutoff valve attaching hole 55 by screws 63 through a second packing 57 as an O-ring made of synthetic rubber and has a valve disk 82 for opening and closing the valve seat hole 54. The shutoff valve 81 has an air-tight structure by an air-tight partition wall 91 between the valve chamber 56 provided with the valve disk 82 and the gas introducing chamber 46 on the other side of an attaching plate 89, The shutoff valve unit includes the above-described inlet pipe 51, the speed reducing chamber 52, the transverse passage 53, the valve chamber 56 and the shutoff valve 81.

The pressure reducing chamber 52 has an opening hole 59 in an opposite side surface to the side surface with which the transverse passage 53 communicates and a cover 60 is air-tightly attached to the opening hole 59 by means of a ultrasonic welding or a friction welding unit.

A passage main body 61 including the inlet pipe, the speed reducing chamber 52, the transverse passage 53 and the valve chamber 56 which are integrally formed and the cover 60 attached to the pressure reducing chamber 52 are formed with an engineering plastic synthetic resin having a resistance to gas such as polyoxymethylene (abbreviation: POM, refer it also as polyacetal), polybutylene terephthalate (abbreviation: PBT).

In a side end of the valve chamber 56 of the passage main body 61, an engaging pawl 58 is integrally formed and engaged with the reinforcing plate 42.

An outer surface of the inlet pipe 51 is widened from an upper side to a lower side and has a taper angle of about 1° in one side.

A flow passage sectional area of the inlet pipe 51 is set to, for instance, about 5 cm². As compared therewith, a flow passage sectional area of the speed reducing chamber 52 is set to about 12 cm². Therefore, a velocity of flow entering the speed reducing chamber 52 in accordance with a principle of continuation of flow velocity is decelerated to about 40 % as high as the flow velocity of the inlet pipe 51.

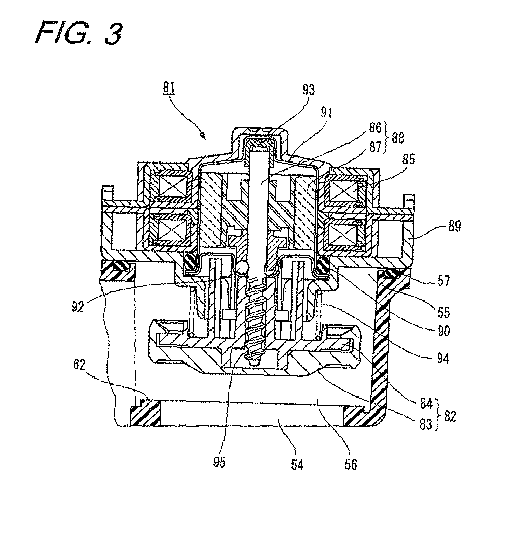

Fig. 3 shows a sectional view of the shutoff valve 81 in the first exemplary embodiment of the present invention.

In Fig. 3, to the attaching plate 89 attached to the shutoff valve attaching hole 55 through the second packing 57, a stator 85 having a two-phase coil is fixed. Further, a rotor 88 is provided inside the stator 85, which includes a lead shaft 86 arranged coaxially with and substantially vertically to the stator 85 and a permanent magnet 87 made of a sintered ferrite magnet. Then, the valve disk 82 is provided that includes a moving body 84 made of a synthetic resin which is screwed to the lead shaft 86 by a lead mechanism 95 and vertically moves in accordance with the rotation of the lead shaft 86 so as to be capable of opening and closing a valve seat 62 of the valve seat hole 54 formed in the valve chamber 56 side and a valve seat 83 made of synthetic rubber which is attached to an end part of the moving body 84. Further, the air-tight partition wall 91 is provided which is arranged between the stator 85 and the rotor 88, formed substantially in the shape of a cap having no insert hole and sealed by an O-ring 90 to hold an air-tightness between an outer side of the attaching plate 89 in which the stator 85 is located and the valve chamber 56 in an inner side of the attaching plate 89 in which the valve disk 82 is located. The air-tight partition wall 91 is formed with a non-magnetic metal such as austenite stainless steel. The shutoff valve 81 is formed by including the stator 85, the rotor 88, the valve disk 82 and the air-tight partition wall 91.

The stator 85 and the rotor 88 form a two-phase excitation PM (permanent magnet) type stepping motor. The PM type stepping motor has a feature that when the number of phases is small, the PM type stepping motor can be formed to be flatter in an axial direction than an electromagnetic solenoid pr a DC motor. The two-phase excitation type as a minimum unit that can control a rotating direction and generate a strong turning torque can be formed in the flattest shape.

In a top part of the air-tight partition wall 91, a slide bearing 93 made of a self-lubricating synthetic resin such as polyoxymethylene is arranged. Further, in the attaching plate 89 side, a rolling bearing 92 formed with a ball made of stainless steel is arranged. A load of a rotating shaft and a vertical movement of the rotor 88 are held by the slide bearing 93 and the rolling bearing 92.

Between the moving member 84 and the attaching plate 89, a spring 94 made of stainless steel is arranged so as to urge the moving body 84 to the direction of the valve seat 62.

The movement and operation of the shutoff valve unit formed as described above will be described below.

Initially, under a valve opening state that the valve disk 82 of the shutoff valve 81 is separated from the valve seat 62, gas entering the gas meter from the gas inlet pipe 43 via a gas piping is introduced to the gas introducing chamber 46 in the gas meter from the valve seat hole 54 via the inlet pipe 51, the speed reducing chamber 52, the transverse passage 53 and the valve chamber 56.

In the gas piping, foreign materials are included, such as iron rust of the piping itself made of steel, sand mixed during a piping work, water content liquefied by the condensation of a small quantity of water included in the gas, or a drain component by the condensation of oil content included in the gas itself, vinyl chloride, synthetic rubber or the like. When large foreign materials of them are transported by a flow of the gas and adhere to the valve disk 82 of the shutoff valve 81 or the valve seat 62, a gap is formed due to a biting of the foreign materials. Thus, an inconvenience may possibly occur that a valve closing performance of the shutoff valve 81 is deteriorated. However, in the case of the shutoff valve unit of this exemplary embodiment, a resistance to the inconvenience due to the biting of the foreign materials is achieved in such a way as described below.

Initially, the foreign materials such as the iron rust or the sand which have a relatively large mass, are hardly moved by the flow of the gas and directly drop from the piping to enter the gas meter drop on the bottom surface 52a of the speed reducing chamber 52 located immediately below the inlet pipe 51. Since there is a stepped part in the speed reducing chamber 52, the foreign materials hardly enter the transverse passage 53. Thus, the foreign materials are hardly conveyed and hardly adhere to the valve disk 82 of the shutoff valve 81 and the valve seat 62 located in an end part thereof.

Then, the foreign materials which have a relatively small mass are transported by the flow of the gas. However, as a flow velocity of the gas is lower, a transporting capability is the lower, so that the transporting capability is lowered due to the decrease of the flow velocity of the gas by the speed reducing chamber 52 and most of the foreign materials drop on the bottom surface 52a of the speed reducing chamber 52. Therefore, the foreign materials are hardly conveyed and hardly adhere to the valve disk 82 of the shutoff valve 81 and the valve seat 62 located in the end part thereof.

Here, when it is assumed that a volume flow velocity of the gas is 6 m³/h, the flow velocity is about 3 m/s in the inlet pipe 51 whose flow passage sectional area is about 5 cm², however, since the flow velocity is decelerated to 1.4 m/s in the speed reducing chamber 52 whose flow passage sectional are 12 cm², most of the large foreign materials drop in the speed reducing chamber 52 and are hardly conveyed and hardly adhere to the valve disk 82 of the shutoff valve 81 and the valve seat 62 located in the end part thereof. Thus, a valve closing performance is hardly deteriorated.

Further, even when water temporarily enters the gas meter from the gas piping, if a quantity of water is small, the water is dropped in the speed reducing chamber 52. Even when a quantity of water is larger, the water is dropped in the gas introducing chamber 46 in the gas meter from the valve seat hole 54. Therefore, the valve disk 82 does not sink in the water, so that the deterioration of the synthetic rubber of the valve disk 82 by the water can be prevented. Further, there is a low possibility that the foreign materials dropping in the passage main body 61 may float in water and adhere to the valve disk 82.

Then, when a shutoff signal is inputted to the shutoff valve 81 from an external control device not shown in the drawing, the stator 85 is excited to rotate the rotor 88 and the valve disk 82 is moved toward the valve seat 62 by the lead mechanism 95 to abut on the valve seat 62. Thus, a gas passage is closed to shut off the gas to the gas introducing chamber 46 from the shutoff valve unit.

In the case of this kind of shutoff valve for the purpose of a shutoff due to a break of prepaid charge or a non-payment preventing function, a cutting off function can be invalidated by inserting an insert member such as a rod for preventing the shutoff between the valve disk and the valve seat. However, in the shutoff valve unit, the valve disk 82 of the shutoff valve 81 or the valve seat hole 54 are located in an interior of the transverse passage 53. Thus, the valve disk 82 of the shutoff valve 81 or the valve seat hole 54 cannot be seen from the gas inlet pipe 43 of the gas meter. Accordingly, even when a finger or a rod shaped member is inserted, they cannot be easily touched. Therefore, an illegality or a tamper for invalidating the cutting off function to the shutoff valve 81 can be effectively prevented.

Further, according to the structure of the present exemplary embodiment, below-described effects are achieved.

The opening hole 59 is formed in the opposite side surface to the transverse passage 53 of the pressure reducing chamber 52 and a metal mold for an injection molding that forms the pressure reducing chamber 52 and the transverse passage 53 is released from the opening hole 59 so that the inlet pipe 51, the pressure reducing chamber 52, the transverse passage 53 and the valve chamber 56 may be formed as an integrally molded product with an inexpensive synthetic resin. Further, since the cover 60 is air-tightly attached to the opening hole 59 by means of the easy ultrasonic welding or friction welding unit, the passage main body 61 can be formed with two parts made of an inexpensive synthetic resin to economically apply the cutting off function to the gas meter.

Since the outer surface of the inlet pipe 51 is formed in a tapered shape having a taper angle of about 1° in one side in which an upper diameter is small and a lower diameter is large, the inlet pipe 51 can be easily inserted into the gas inlet pipe 43 to which the O-ring 45 is set. Further, when the inlet pipe is inserted into the gas inlet pipe 43, the O-ring 45 is diametrically compressed so that the gas is sealed. Further, the engaging pawl 58 is engaged with the reinforcing plate 42, so that the shutoff valve passage can be easily attached to the gas meter.

Further, since the shutoff valve 81 is formed with the two-phase excitation PM type stepping motor which can be formed to be flat in the axial direction, an assembled height of the valve chamber 56 and the shutoff valve 81 can be made to be lower than that of the solenoid. Further, since a position of the gas inlet pipe 43 is separated from a position of the shutoff valve 81 in the transverse direction, the shutoff valve 81 can be installed by avoiding an interference with the caulking part 47 as a protruding part that attaches the gas inlet pipe 43 to the upper casing 41 of the gas meter. In addition to the above-described effects, an installed height of the shutoff valve unit can be made to be small and the shutoff valve unit can be installed in a limited space of an existing gas meter. Further, since the air-tight partition wall 91 is incorporated between the rotor 88 and the stator 85 of the shutoff valve 81 to air-tightly form the inner side and the outer side with the attaching plate 89 sandwiched between them, under a valve closing state that the valve disk 82 comes into close contact with the valve seat 62, the leakage of the gas can be prevented via the shutoff valve 81 to realize an excellent shutoff performance.

Further, under the valve closing state that the valve disk 82 comes into close contact with the valve seat 62, since a gas pressure from an upstream side urges the valve disk 82 toward the valve seat 62, when the gas pressure is high, the valve is not opened to realize the shutoff performance of a high reliability.

Further, since the lead shaft 86 as the rotating shaft of the shutoff valve 81 is substantially vertically arranged, the rolling bearing 92 and the slide bearing 93 do not receive an eccentric load due to a gravity to one direction normal to a rotation as in the case that the rotating shaft is arranged in the transverse direction. Therefore, stability or durability of the rolling bearing 92 and the slide bearing 93 can be improved.

The upper casing 41 of the gas meter is formed with the press worked steel sheet, however, the shutoff valve unit can be simply attached to a gas meter formed with an aluminum die cast product with which a gas inlet pipe is formed integrally. In this case, the cutting off function can be applied to the gas meter similarly to the gas meter formed with the steel sheet, a deterioration of a valve closing performance due to the adhesion of the foreign materials and the entry of water to the piping can be reduced, it is difficult to make a tamper or steal gas and the height can be made to be compact.

It is to be predetermined by the present invention and included within a protected scope that a person with ordinary skill in the art makes various changes or applications to the present invention in accordance with the description of the specification and a well-known technique without departing from the gist and the scope of the present invention. Further, components in the above-described exemplary embodiment may be arbitrarily combined together within a scope which does not deviate from the gist of the present invention.

This application is based on Japanese Patent Application (JPA No. 2009-136975) filed on June 8, 2009 and contents thereof are incorporated herein as a reference.

### Industrial Applicability

As described above, since the shutoff valve unit according to the present invention can be easily attached to the gas meter whose casing is formed with a press worked thin plate, the shutoff valve unit can be applied to various gas meters.

### Description of Reference Numerals and Signs

43..gas inlet pipe 45...O-ring (first packing) 46...gas introducing chamber 51...inlet pipe 52...speed reducing chamber 52a...bottom surface (speed reducing chamber) 53...transverse passage 54... valve seat hole 55....shutoff valve attaching hole 56...valve chamber 57...second packing 59...opening hole 60...cover 81...shutoff valve 82...vale disk 85 ... stator 88...rotor 89...attaching plate 91...air-tight partition wall (unit of air-tight structure)

## Claims

1. A shutoff valve unit comprising:
a substantially vertical inlet pipe which is air-tightly attachable to a gas inlet pipe of a gas meter through a first packing;
a speed reducing chamber arranged in a lower part of the inlet pipe and having a flow passage sectional area larger than a flow passage sectional area of the inlet pipe;
a transverse passage opened substantially in a horizontal direction from a side surface at a position higher than a bottom surface of the speed reducing chamber;
a valve chamber arranged in an end part of the transverse passage and having a valve seat hole opened downward to a gas introducing chamber in the gas meter and a shutoff valve attaching hole provided to be opposed to the valve seat hole; and
a shutoff valve attached to the shutoff valve attaching hole through a second packing and having a valve disk that opens and closes the valve seat hole, wherein the shutoff valve has an air-tight structure between a passage in which the valve disk is located and an outer side of the passage on the other side of an attaching plate.

2. A shutoff valve unit according to claim 1, wherein the inlet pipe, the speed reducing chamber, the transverse passage and the valve chamber are integrally formed with a synthetic resin, an opening hole is provided on a side surface of the pressure reducing chamber opposite to the transverse passage and a cover is air-tightly attached to the opening hole.

3. A shutoff valve unit according to claim 1 or 2, wherein the first packing is an O-ring packing which can be diametrically compressed and the inlet pipe has an upper part which can be inserted to the O-ring packing and an outer surface formed in a tapered shape in which an upper diameter is small and a lower diameter is large.

4. A shutoff valve unit according to any one of claims 1 to 3, wherein the shutoff valve is a motor type shutoff valve in which a turning force or torque of a rotor of a two-phase excitation PM type stepping motor whose rotating shaft is substantially vertically arranged is converted into a vertical movement to move the valve disk upward downward and an air-tight structure is provided between the valve disk and the rotor, and the attaching plate and a stator arranged in an upper part thereof.
